(19) Europäisches Patentamt
European Patent Office
Office européen des brevets

(11) **EP 2 577 231 B1**

(12) **FASCICULE DE BREVET EUROPEEN**

(45) Date de publication et mention de la délivrance du brevet:
**04.01.2017 Bulletin 2017/01**

(21) Numéro de dépôt: **11722440.2**

(22) Date de dépôt: **30.05.2011**

(51) Int Cl.:
***G01C 21/16*** *(2006.01)*

(86) Numéro de dépôt international:
**PCT/EP2011/058862**

(87) Numéro de publication internationale:
**WO 2011/151297 (08.12.2011 Gazette 2011/49)**

(54) **DISPOSITIF D'AIDE A LA NAVIGATION, NOTAMMENT A L'INTERIEUR DE BÂTIMENTS**

HILFSVORRICHTUNG, INSBESONDERE ZUR NAVIGATION IN GEBÄUDEN.

AIDING DEVICE FOR NAVIGATION, IN PARTICULAR INSIDE BUILDINGS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.06.2010 FR 1054294**

(43) Date de publication de la demande:
**10.04.2013 Bulletin 2013/15**

(73) Titulaire: **Commissariat à l'Énergie Atomique et aux Énergies Alternatives 75015 Paris (FR)**

(72) Inventeur: **CASTANEDA, Nadir F-75014 Paris (FR)**

(74) Mandataire: **Lucas, Laurent Jacques Marks & Clerk France Conseils en Propriété Industrielle Immeuble Visium 22, Avenue Aristide Briand 94117 Arcueil Cedex (FR)**

(56) Documents cités:
**WO-A1-2009/007256**

- **KRACH B ET AL: "Cascaded estimation architecture for integration of foot-mounted inertial sensors", POSITION, LOCATION AND NAVIGATION SYMPOSIUM, 2008 IEEE/ION, IEEE, PISCATAWAY, NJ, USA, 5 mai 2008 (2008-05-05), pages 112-119, XP031340870, ISBN: 978-1-4244-1536-6 cité dans la demande**
- **WIDYAWAN ET AL: "A Backtracking Particle Filter for fusing building plans with PDR displacement estimates", POSITIONING, NAVIGATION AND COMMUNICATION, 2008. WPNC 2008. 5TH WORKSHOP ON, IEEE, PISCATAWAY, NJ, USA, 27 mars 2008 (2008-03-27), pages 207-212, XP031247849, ISBN: 978-1-4244-1798-8 cité dans la demande**
- **MAAN E EL NAJJAR ET AL: "A Road-Matching Method for Precise Vehicle Localization Using Belief Theory and Kalman Filtering", AUTONOMOUS ROBOTS, KLUWER ACADEMIC PUBLISHERS, BO, vol. 19, no. 2, 1 septembre 2005 (2005-09-01), pages 173-191, XP019204923, ISSN: 1573-7527, DOI: DOI:10.1007/S10514-005-0609-1**
- **Nikolas Trawny and Stergios I. Roumeliotis: "Indirect Kalman Filter for 3D Attitude Estimation", , 31 mars 2005 (2005-03-31), XP002617001, Extrait de l'Internet: URL:http://www-users.cs.umn.edu/~trawny/Publications/Quaternions_3D.pdf [extrait le 2011-01-17]**

**Description**

La présente invention concerne un dispositif d'aide à la navigation basé sur l'utilisation d'une centrale inertielle. Plus particulièrement l'invention porte sur un nouveau procédé pour la fusion de données cartographiques visant à annuler les erreurs de dérive dans des systèmes de navigation inertielle. Elle s'applique notamment pour le guidage de personnes malvoyantes à l'intérieur de bâtiments ou encore pour le guidage d'équipes de secours dans des bâtiments ou des lieux inaccessibles aux ondes radiofréquences utilisées dans les systèmes GPS.

Les systèmes d'aide à la navigation à l'intérieur de bâtiments, et plus généralement dans des endroits inaccessibles à la communication par satellite, ne peuvent pas utiliser, à l'heure actuelle, les systèmes de positionnement ou de géoréférencement tels que le GPS. A l'intérieur des bâtiments, il faut donc avoir recours à d'autres types de systèmes de navigation. Dans ce cas, une des solutions possibles repose sur l'utilisation d'un système de navigation inertielle.

Un système de navigation inertielle est une aide à la navigation basée sur des capteurs de mouvement (accéléromètres) et des capteurs de rotation (gyromètres) contenus par exemple dans une centrale inertielle. Les mesures obtenues à partir de ces capteurs sont utilisées pour calculer la position, la vitesse et l'orientation de la centrale inertielle et, par conséquent, de celui qui porte ce système. A la différence d'autres systèmes, notamment des systèmes de positionnement par satellites (GPS), par bornes WIFI, Bluetooth, etc., les systèmes de navigation inertiels sont complètement autonomes, dans le sens où ils ne dépendent pas de la transmission ou de la réception de signaux par rapport à une source externe. Ils sont ainsi adaptés à des milieux inaccessibles aux ondes électromagnétiques. Cependant, ces systèmes de navigation inertielle dépendent de la connaissance a priori de la position, de la vitesse et de l'orientation de la centrale inertielle (et donc du porteur du système) au démarrage de la navigation. Celles-ci peuvent être fournies par l'opérateur du système ou bien estimées au démarrage à partir d'autre type de capteurs (GPS, RFID...). La position, la vitesse et l'orientation de la centrale inertielle sont mises à jour au fur et à mesure, à partir des mesures des capteurs inertiels par des algorithmes adaptés.

Dans sa plus simple implémentation, un système de navigation inertielle standard est composé d'une unité de calcul et de capteurs inertiels du type accéléromètres et gyromètres. De manière générale, l'unité de calcul se compose principalement de deux modules. Le module d'intégration et le module d'estimation d'erreurs. Le premier est dédié au calcul de la position, la vitesse et l'orientation de la centrale par l'intégration de signaux inertiels. Le deuxième module est dédié à l'estimation d'erreurs de dérive induites par les défauts de capteurs inertiels. Cette estimation se fait typiquement à l'aide d'un filtre de Kalman indirect dont les entrées dépendent de sources d'information complémentaires telles que les cartes navigables, les boussoles, les GPS, etc. La réussite de ces systèmes dépend grandement de la précision de capteurs inertiels, des sources d'informations complémentaires disponibles ainsi que de la façon d'exploiter ces dernières.

Etant donné que la plupart des systèmes de navigation donnent la position et l'orientation du porteur par rapport à une carte de navigation numérisée décrivant l'espace navigable, cette carte numérique représente la source d'informations complémentaires la plus facile d'accès pour corriger les erreurs de dérive. Ceci donne lieu à des procédés de fusion de données inertielles et de données cartographiques visant à augmenter la précision des systèmes de navigation inertielle. Par conséquent, un problème à résoudre est d'obtenir un procédé de fusion de données cartographiques afin de corriger les erreurs de dérive d'un système de navigation inertielle répondant aux exigences suivantes :

- Présenter une faible complexité du procédé afin de permettre de mieux répondre aux contraintes du temps réel dans des architectures matérielles et logicielles ayant une capacité de calcul limitée ;
- Etre adapté aux cartes de navigation existantes dans des systèmes de navigation et de guidage communément utilisées pour des calculs d'itinéraire ;
- Etre indépendant du modèle d'évolution de l'objet qui navigue.

En particulier, il est à noter que pour que le dispositif de navigation soit portable, i.e. léger et petit, il doit être implémenté dans des architectures matérielles dédiées appelées communément « systèmes embarqués ». Ces systèmes ont, de manière générale, des contraintes en termes de puissance de calcul, espace mémoire, consommation énergétique, etc. Par conséquent, les procédés de localisation prenant en compte des données cartographiques doivent tenir compte de ces contraintes.

Les solutions actuelles ne permettent pas de répondre à ces exigences. En particulier, on peut trouver dans l'art antérieur des procédés basés sur les filtres de particules, réputés pour avoir besoin d'une grande puissance de calcul ou encore des procédés basés sur les filtres de Kalman directs, nécessitant des modèles d'évolution de l'objet navigant.

En ce qui concerne les solutions basées sur les filtres de particules, le document de B. Krach and P. Roberston, Cascaded estimation architecture for integration of foot-mounted inertial sensors, Proc. IEEE/ION Position, Location and Navigation Symposium, 2008, pp. 112-119, propose un système de navigation inertielle pour les piétons utilisant la technologie de centrales inertielles miniatures basées sur des MEMS. La solution utilise le système de navigation standard, décrit précédemment, et ajoute un deuxième module de traitement de données dont les entrées sont les sorties du système de navigation standard à savoir la position, la vitesse et l'orientation estimées, ainsi que les données cartographiques. La fusion de ces entrées s'effectue par l'intermédiaire d'un filtre de particules. Pour sa part, le filtre de particules fait intervenir les données cartographiques à travers un modèle d'évolution associé aux particules. Le principe de cette évolution est le suivant : chaque particule, représentant une hypothèse de position et d'orientation du porteur, par exemple le piéton, évolue vers une autre position à condition qu'il n'y ait pas d'obstacle entre ces deux positions. La situation géographique des obstacles, représentant les murs par exemple, est connue d'avance grâce à la carte numérique des lieux.

Un autre document de Widyawan, M. Klepal, and S. Beauregard, A backtracking particle filter for fusing building plans with pdr displacement estimates, Proc. 5th Workshop on Positioning, Navigation and Communication WPNC 2008, 27-27 March 2008, pp. 207-212, présente un système proche de celui du document précédent pour la fusion des données inertielles et cartographiques. La seule différence est que selon ce deuxième document, on n'implémente pas un algorithme conventionnel pour l'estimation d'erreurs, c'est-à-dire celui basé sur un filtre de Kalman, mais on utilise directement l'API (Application Programming Interface) fournie par le constructeur de la centrale inertielle afin d'obtenir une estimation de l'orientation de la centrale inertielle. Cette API utilise un filtre de Kalman pour estimer l'orientation de la centrale inertielle à partir des mesures des accéléromètres, gyromètres et magnétomètres. A partir de cette estimation, les auteurs du document appliquent les formules classiques d'intégration aux mesures des accéléromètres pour obtenir la position et la vitesse du piéton, porteur du système de navigation.

Les solutions proposées dans ces documents présentent néanmoins plusieurs inconvénients :

- Il est bien connu que les filtres de particules sont très gourmands en temps de calcul, ce qui rend leur implémentation en temps réel uniquement possible sur des plateformes très puissantes et peu portables ;
- Plus particulièrement, les approches proposées par les deux documents précédents ont besoin de savoir si un mur a été traversé entre deux pas consécutifs du porteur. Ceci présuppose un test en temps réel permettant de déterminer si le segment de ligne droite décrit par les deux positions, des deux pas, entre en intersection avec un segment de ligne droite représentant un mur. Le test peut s'avérer long et gourmand en temps si le nombre de murs est grand, dans le cas par exemple d'un bâtiment avec un grand nombre de pièces. Ce test est d'autant plus gourmand en temps, si l'on considère qu'il doit s'effectuer pour chacune des hypothèses, particules, dont le nombre doit être assez grand afin d'obtenir une bonne estimation de la position du piéton;
- Ces approches nécessitent une carte numérique des lieux conçue spécialement à cet effet. Autrement dit, ces approches ne tirent pas profit des cartes de navigation conventionnelles et souvent utilisées dans les systèmes de navigation classiques (GPS, tomtom...). Par conséquent, un système de navigation qui emploie les algorithmes proposés dans les documents précédents nécessite une deuxième carte de navigation spécifique afin de pouvoir calculer, en plus de la position et orientation, l'itinéraire à suivre par le piéton.

En ce qui concerne l'utilisation des algorithmes basés sur les filtres de Kalman, plusieurs solutions ont été proposées. En particulier, diverses méthodes pour intégrer des données cartographiques dans le cadre du filtrage de Kalman ont été proposées pour des applications de poursuite de véhicules terrestres et aériens. Toutes ces techniques s'appliquent au filtre de Kalman direct, où le modèle d'évolution du véhicule est disponible. Etant donné que dans le cadre de la navigation inertielle pédestre on utilise le filtre de Kalman indirect, puisqu'on ne connaît pas le modèle d'évolution du piéton, les algorithmes basés sur une implémentation du filtre de Kalman direct ne s'appliquent pas.

De manière générale, le filtre de Kalman indirect est l'outil le plus souvent utilisé dans un module d'estimation d'erreurs. Cela est dû au fait qu'il peut opérer en temps réel à une cadence très élevée et au fait qu'il est indépendant du modèle d'évolution de la centrale inertielle, i.e. le modèle dynamique décrivant l'évolution de la position, la vitesse et l'orientation de la centrale au cours du temps. En effet, le filtre de Kalman indirect suit l'évolution des erreurs du module d'intégration et non pas l'évolution de la position, la vitesse et l'orientation de la centrale. Par conséquent, le filtre de Kalman indirect est indépendant de ce modèle d'évolution. Ceci représente un avantage, par exemple pour la localisation d'un piéton puisqu'à l'heure actuelle on ne sait pas modéliser le mouvement de la centrale lorsqu'elle est attachée au piéton, idéalement placée sur le pied de celui-ci. Néanmoins, cette indépendance entraine aussi l'impossibilité de considérer directement les contraintes de mouvement, introduites par les données cartographiques, dans le filtre de Kalman indirect.

Une manière de contourner cette impasse pour la fusion de données inertielles et données cartographiques, dans le cadre du filtre de Kalman indirect, passe par l'utilisation de la technique dite de « map-matching ». Cette technique consiste à prendre la sortie du système de navigation standard, c'est-à-dire la position et de la projeter sur la carte de navigation numérisée afin d'obtenir une position « corrigée ».

Le document de Daniela Büchel and Pierre-Yves Gilliéron, Navigation pédestre à l'intérieur des bâtiments, Géomatique Suisse 11/2004 (2004), pages 664-668, propose deux techniques de « map-matching » adaptées à la navigation pédestre. La première de ces techniques, appelée « map-matching » point à point, recale la position estimée par rapport au nœud de la carte le plus proche. Ces nœuds représentent des points caractéristiques tels que des portes, des jonctions, ou des connecteurs d'étage notamment. La deuxième technique, appelée « map-matching » point à arête, détermine l'arête la plus proche de la position estimée. Les arêtes représentent une portion de route modélisée par une ligne droite entre deux nœuds.

Un inconvénient de ces techniques de « map-matching » est notamment qu'elles ne contribuent pas à l'estimation d'erreurs du module d'intégration. En particulier, mis à part la position qui est éventuellement recalée, les erreurs d'orientation et de vitesse ne sont pas corrigées. Ce manque de corrections entraîne à moyen terme un accroissement des erreurs qui finit par affecter la position estimée.

Un but de l'invention est de pallier les inconvénients précités. A cet effet, l'invention a notamment pour but un dispositif d'aide à la navigation, apte à être embarqué sur un porteur, ce dispositif comportant :

-    au moins une centrale inertielle ;
-    un module d'intégration estimant la position, la vitesse et l'orientation du porteur à partir des données fournies par la centrale inertielle ;
-    une carte numérisée des lieux dans lesquels évolue le porteur, ladite carte stockant un réseau navigable le long duquel peut se déplacer le porteur ;
-    un module générateur de pseudo-mesures de position à partir de la position estimée par le module d'intégration et des données cartographiques fournies par la carte numérisée, une pseudo-mesure de position indiquant la position qui devrait être estimée par le module d'intégration en présence de contraintes de mouvement imposées par la carte numérisée des lieux ;
-    un filtre de Kalman étendu indirect relié au module générateur de pseudo-mesures de position par un interrupteur, ledit filtre estimant les erreurs sur la position, la vitesse et l'orientation, ainsi que toute autre variable associée à la centrale inertielle, estimées par le module d'intégration à partir des pseudo-mesures de position produites par le module ;
-    un module indiquant la disponibilité d'une pseudo-mesure du module commandant la fermeture de l'interrupteur lorsqu'une pseudo-mesure est disponible et l'ouvrant dans le cas contraire ;

la sortie du module d'intégration, indiquant l'estimation de position, vitesse et orientation, étant reliée au module générateur de pseudo-mesures de position, au filtre de Kalman et à l'entrée positive d'un filtre d'un soustracteur, les erreurs estimées par le filtre de Kalman étant fournies à l'entrée négative du soustracteur, la sortie dudit soustracteur fournissant la position, la vitesse et l'orientation corrigées du porteur.

Les données de position, vitesse et orientation corrigées présentes en sortie du soustracteur sont par exemple envoyées au module d'intégration pour que ce dernier effectue la prochaine estimation de position à partir de ces données.

Le dispositif comporte par exemple un module générant une pseudo-mesure de vitesse de la centrale inertielle, une pseudo-mesure de vitesse indiquant la vitesse qui devrait être estimée par le module d'intégration lorsque l'on détecte que la centrale ne se déplace pas, filtre de Kalman indirect estimant les erreurs sur la position, la vitesse et l'orientation estimées par le module d'intégration à partir des pseudo-mesures de vitesses produites par le module, les données corrigées en sortie du soustracteur étant relatives à la position, à la vitesse et à l'orientation du porteur.

Le niveau de précision d'une pseudo-mesure de position peut être défini à l'aide d'une matrice de covariance, ladite matrice modélisant l'incertitude dans la position du porteur autour d'une arête $s$ sur laquelle se trouve le porteur, ladite arête étant située à l'intérieur du réseau navigable stocké dans la carte numérisée.

La matrice de covariance $R(s)$ est par exemple définie selon la relation suivante :

$$R(s) = \Phi_s \begin{bmatrix} \sigma_o^2 & 0 & 0 \\ 0 & \sigma_a^2 & 0 \\ 0 & 0 & \sigma_n^2 \end{bmatrix} \Phi_s^T$$

où $\Phi_s$ est la matrice de rotation conventionnelle associée à l'arête $s$ et où $\sigma_o^2$ et $\sigma_n^2$ représentent les incertitudes de la position dans les deux directions qui conforment le plan orthogonal à l'arête $s$ et $\sigma_a^2$ l'incertitude au long de l'arête $s$ du réseau navigable.

D'autres caractéristiques et avantages de l'invention apparaîtront à l'aide des dessins annexés qui représentent :

-    la figure 1, un exemple système d'aide à la navigation selon l'art antérieur ;
-    la figure 2, un autre exemple de système d'aide à la navigation selon l'art antérieur ;
-    la figure 3, un exemple de réalisation d'un système d'aide à la navigation selon l'invention;
-    la figure 4, une illustration du principe de traitement appliqué par un système selon l'invention ;
-    la figure 5, une illustration des données prises en compte par un estimateur d'erreurs utilisé dans un système selon l'invention.

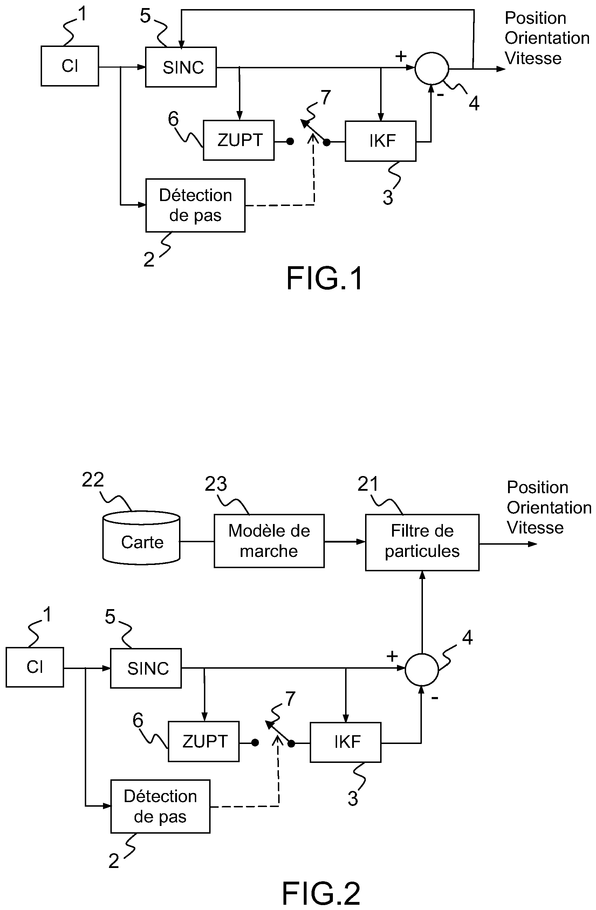

La figure 1 présente à titre d'exemple un système d'aide à la navigation selon l'art antérieur comportant un module 5 constitué d'un intégrateur, un module 3 dédié à l'estimation d'erreurs par un filtre de Kalman indirect, un module 2 pour la détection de pas et un module 6 générateur de pseudo-mesures de vitesse. Les données inertielles en entrée des modules 2 et 5 sont issues d'une centrale inertielle 1, contenant notamment des capteurs inertiels du type accéléromètres et gyromètres à trois axes. De façon classique, la sortie du module 5 est reliée aux modules 6 et 3 et à un soustracteur 4. Le module 6 est relié au module 3 uniquement si un interrupteur 7 est fermé. Le module 2 ferme l'interrupteur 7 lorsqu'un pas a été détecté et l'ouvre dans le cas contraire. Le module 3 reçoit en entrée la sortie du module 6 lorsque l'interrupteur 7 est fermé, afin d'estimer les erreurs du module 5. Les erreurs estimées par le module 3 sont ensuite utilisées au niveau du soustracteur 4 pour corriger les estimés de position, vitesse et orientation calculés par le module 5. Enfin, la position, la vitesse et l'orientation ainsi corrigées en sortie du soustracteur 4 sont renvoyées au module 5, pour que ce dernier effectue la prochaine estimation à partir de données sans erreurs. Malgré sa simplicité d'implémentation, l'utilisation de ce système ne donne pas de bons résultats pour une navigation à moyen terme. De plus, il est bien connu que l'utilisation de la pseudo mesure de vitesse ne permet pas d'estimer les erreurs liées au lacet ou cap.

La figure 2 illustre encore un système selon l'art antérieur utilisant un filtre de particules. Cette solution reprend le système de la figure 1, la sortie du soustracteur 4 étant reliée à une entrée d'un module 21 ayant la fonction de fusionner les données provenant du soustracteur 4 avec les données cartographiques au moyen d'un filtre de particules. Plus particulièrement, la position, la vitesse et l'orientation ainsi que leurs matrices de covariance estimées par le système de la figure 1 sont traitées par le filtre de particules. C'est grâce au traitement de ces variables, fournies à chaque pas détecté, que l'on peut définir un modèle simplifié de la marche du porteur. Un modèle de marche 23 adapté aux contraintes cartographiques est pris en compte par le filtre de particules afin d'estimer la position et l'orientation de la centrale inertielle 1. Comme indiqué précédemment, un système selon la figure 2 ne permet pas de répondre aux contraintes ci-dessus.

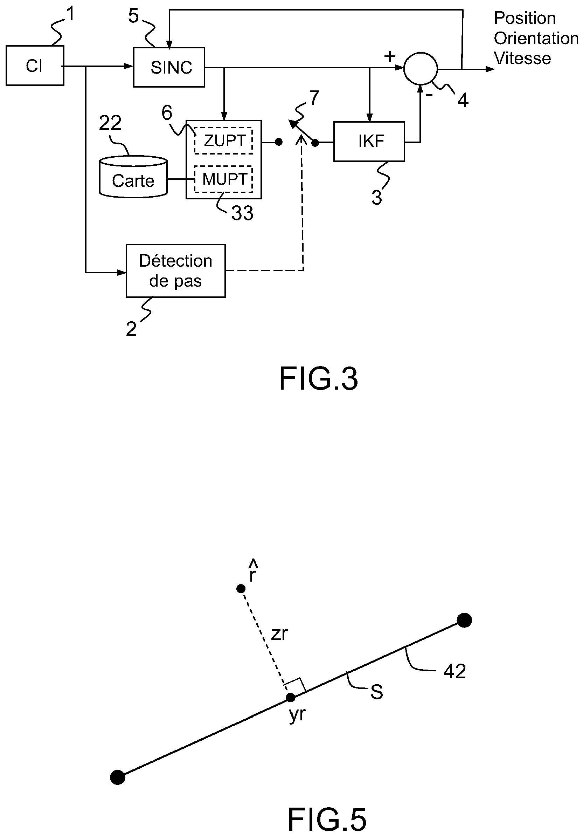

La figure 3 illustre un exemple de réalisation d'un dispositif selon l'invention apte à être embarqué sur un porteur. Il comporte toujours une centrale inertielle 1 et un module d'intégration 5 tel que décrit précédemment ainsi qu'un module de détection de pas 2, ces deux derniers modules 2, 5 étant alimentés par les données fournies par la centrale inertielle. Le dispositif selon l'invention utilise un filtre de Kalman indirect 3 comme module d'estimation d'erreurs. Les données cartographiques sont directement intégrées dans ce filtre de Kalman 3 au moyen d'une procédure, appelée par la suite « MUPT », représentée par un module 33. Ce module génère une pseudo mesure de position ainsi que son niveau de précision à partir de la position estimée par le module d'intégration 5 et des données cartographiques fournies par la carte numérisée 22. La pseudo mesure de position ainsi générée est fournie au module 3 uniquement si l'interrupteur 7 reliant ce module au module 33 est fermé.

Le module 2 ferme l'interrupteur 7 lorsqu'un pas a été détecté et l'ouvre dans le cas contraire. Le niveau de précision de la pseudo mesure est défini à l'aide d'une matrice de covariance comme le décrit la suite de cette description.

La pseudo mesure de position indique la position qui devrait être estimée par le module d'intégration 5 lorsque l'on considère les contraintes de mouvement imposées par la carte numérisée des lieux. Etant donné que cette estimation est basée sur une modélisation imparfaite de la carte, la matrice de covariance reflétant l'incertitude de l'estimée est également déterminée dans le module 33 « MUPT ». Ces informations sont ensuite livrées au module d'estimation d'erreurs 3, constitué du filtre de Kalman indirect, afin d'être traitées dans un cadre probabiliste pour mettre à jour l'erreur d'orientation, de vitesse et de position ainsi que toute autre variable à estimer par le filtre de Kalman.

L'invention permet ainsi d'intégrer les données cartographiques directement et en temps réel dans le module d'estimation d'erreurs 3. Ainsi, les données cartographiques contribuent aussi à l'estimation d'erreurs de dérive du module d'intégration 5. Contrairement aux autres systèmes de l'art antérieur, notamment illustrés par la figure 2 où l'on se sert des filtres de particules pour la fusion de données cartographiques, le procédé selon l'invention est peu coûteux en calculs et par conséquent adapté pour des applications par exemple embarquées et/ou en temps réel. De plus, l'utilisation de la procédure MUPT permet l'estimation des erreurs des trois composantes liées à l'orientation, à savoir le roulis, le tangage et le lacet, contrairement au système illustré par la figure 1. En effet, il est bien connu que l'utilisation de la pseudo mesure de vitesse ne permet pas d'estimer les erreurs du lacet.

Ainsi, le système selon l'invention de la figure 3 comporte une ou plusieurs centrale inertielle 1, un module d'intégration 5, un module générateur de pseudo-mesures de position 33 tel que décrit précédemment, une carte numérisée 22, un filtre de Kalman indirect 3 pour effectuer l'estimation d'erreurs et un détecteur de pas 2. En option, un générateur de pseudo mesures de vitesse 6 peut être également inclus. Le mode de fonctionnement est le suivant : la sortie du module 5 est reliée aux modules 33, 3, et à l'entrée positive d'un soustracteur 4 et optionnellement au module 6. Dans ce cas le module 33 et le module 6 sont reliés au module 3 uniquement si l'interrupteur 7 est fermé. Le module 2 ferme l'interrupteur 7 lorsqu'un pas a été détecté et l'ouvre dans le cas contraire. Le module 3 reçoit en entrée les pseudo mesures produites par les modules 33 et 6, lorsque l'interrupteur 7 est fermé, afin d'estimer les erreurs du module 5. Les erreurs estimées par le module 3 sont ensuite utilisées au niveau de l'entrée négative du soustracteur 4 pour corriger les estimés de position, vitesse et orientation calculés par le module 5, le soustracteur retranchant la valeur présente sur son entrée négative à la valeur présente sur son entrée positive. Enfin, la position, la vitesse et l'orientation ainsi corrigées, en sortie du soustracteur 4, sont renvoyées au module 5, pour que ce dernier effectue la prochaine estimation à partir de données sans erreurs.

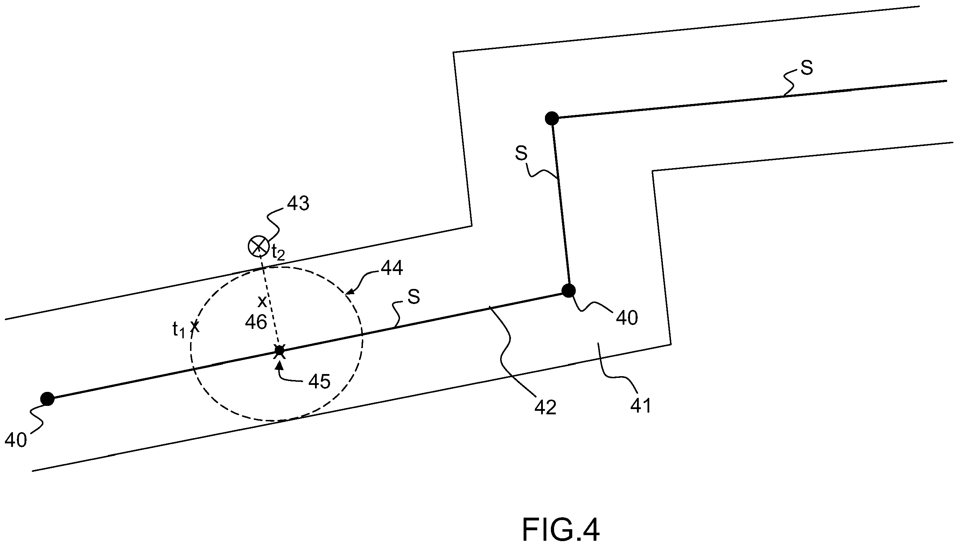

La figure 4 illustre le cadre conceptuel de l'invention. Plus particulièrement, la figure 4 présente à titre d'exemple un couloir 41 à l'intérieur d'un bâtiment dans lequel doit se déplacer un porteur d'un système selon l'invention. Le couloir, modélisé par des arêtes s comprises entre des noeuds 40, fait partie du réseau navigable 42 enregistré dans la carte numérisée 22.

Le module d'intégration 5 calcule en permanence la position de la centrale inertielle 1, fixée par exemple à la chaussure du piéton, à partir des mesures bruitées de capteurs inertielles. A un instant donné t2 la position calculée 43 par le module d'intégration peut se placer en dehors du domaine navigable 41 du fait des erreurs de dérive induites par les défauts des capteurs inertiels. Cette position étant fausse, elle doit être corrigée afin d'éviter la propagation de l'erreur au cours du temps. Pour ce faire, le module MUPT 33 projette la position 43 sur le réseau navigable, afin de générer une pseudo mesure de position 45 qui appartienne au réseau navigable 42. Etant donné que la vraie position du porteur 46 peut se trouver sur n'importe quel point autour de l'arête s et pas nécessairement sur la projection 45, le module MUPT 33 définit également une zone de confiance 44 centrée sur la projection 45 et adapté à l'arête s. Enfin, le module MUPT 33 délivre au filtre de Kalman indirect la pseudo mesure de position avec un niveau de précision défini, dans l'exemple, par l'ellipse 44. Le filtre traite ces données pour calculer les erreurs de dérive du module d'intégration.

Le filtre de Kalman est un estimateur récursif. En d'autres termes, pour estimer l'état courant, seuls l'état précédent et les mesures actuelles sont nécessaires, en l'occurrence les mesures du module MUPT 33 et optionnellement du module ZUPT 6. Le filtre a deux phases distinctes, la prédiction et la mise à jour. La phase de prédiction utilise l'état estimé de l'instant précédent pour produire une estimation de l'état courant. Dans l'étape de mise à jour, les observations de l'instant courant sont utilisées pour corriger l'état prédit dans le but d'obtenir une estimation plus précise. L'invention utilise par exemple un filtre de Kalman indirect. Dans une implémentation standard du filtre de Kalman, direct, les états tels que l'orientation, la vitesse et la position se trouveraient parmi les variables du filtre et les mesures seraient les entrées du module d'intégration 5, telles que les accélérations et les vitesses de rotation mesurées par les capteurs inertiels. Dans le filtre de Kalman indirect, les erreurs d'orientation, de vitesse et de position se trouvent parmi les variables estimées et la mesure présentée au filtre est la différence entre la sortie du module d'intégration 5 et une source d'information complémentaire qui sont ici les sorties des modules MUPT 33 et ZUPT 6.

De manière plus formelle, supposons qu'un piéton, porteur du système, se trouve sur l'arête s du réseau navigable 42 et que la position estimée par le module d'intégration 5 à l'instant actuel est $\hat{r}$. La projection de $\hat{r}$ sur s peut s'écrire selon la relation suivante :

$$y_r = f_s(\hat{r}) \qquad (6)$$

où $f_s(\cdot)$ est une fonction vectorielle dont la forme dépend du type de projection que l'on a choisi (orthogonale ou probabiliste) et de l'arête s.

Par simplicité, on peut écrire le modèle permettant de relier la pseudo-mesure $y_r$ et la vraie position du piéton r selon la relation suivante :

$$y_r = r + w_r(s) \qquad (7)$$

où $w_r(s)$ est un bruit blanc gaussien de moyenne nulle et matrice de covariance $R(s)$. La matrice $R(s)$ est censée modéliser l'incertitude dans la position du porteur autour de l'arête s. A cette fin on peut utiliser le modèle de bruit directionnel défini selon la relation suivante :

$$R(s) = \Phi_s \begin{bmatrix} \sigma_o^2 & 0 & 0 \\ 0 & \sigma_a^2 & 0 \\ 0 & 0 & \sigma_n^2 \end{bmatrix} \Phi_s^T \qquad (8)$$

où $\Phi_s$, est la matrice de rotation conventionnelle associée à l'arête s et où $\sigma_o^2$ et $\sigma_n^2$ représentent les incertitudes de la position dans les deux directions qui conforment le plan orthogonal à l'arête s et $\sigma_a^2$ l'incertitude au long de l'arête s du réseau navigable 42.

Si l'on prend en compte la définition d'erreur sur la position qui s'écrit

$$\delta r = r - \hat{r}$$

où r est la vrai position de la centrale et que l'on remplace r par la pseudo mesure de position $y_r$, on obtient le modèle de mesure pour le filtre de Kalman indirect, donné par

$$\begin{aligned} z_{\delta r} &= y_r - \hat{r} \\ &= \delta r + w_r \end{aligned} \qquad (9)$$

Une analyse plus en détail de l'équation (9) révèle que l'entrée du filtre de Kalman $z_{\delta r}$ est une mesure de l'écart entre la position $\hat{r}$ estimée par le module d'intégration 5 et sa projection $y_r$ sur la carte, illustrées par la figure 5. Cet écart est modélisé comme une variable aléatoire Gaussienne de moyenne $\delta r$ et matrice de covariance $R(s)$. Par conséquent, le filtre de Kalman 3 es-

time une valeur de $\delta r$ telle que la valeur corrigée de la position $r=\delta r+\hat{r}$ soit proche de l'arête qui modélise la position du piéton sur la carte. Autrement dit, les erreurs de dérive, introduites par la présence des biais dans les mesures $y_a$ et $y_g$ des accéléromètres et des gyromètres, sont contraintes par la cartographie des lieux.

Un système selon l'invention a notamment les avantages suivants :

- Le traitement peu coûteux des données cartographiques permet la conception des systèmes de navigation inertielle précis dans des architectures avec une puissance de calcul limitée. Ce qui implique la conception de dispositifs de navigation très portables et autonomes tout en gardant une très bonne précision sur le positionnement du porteur sur la carte. On peut penser, par exemple, à un système de navigation inertielle implémenté dans un PDA ou dans un téléphone mobile ;
- Le module « MUPT » 33 est basé sur le modèle des cartes de navigation le plus utilisé par les systèmes de navigation terrestres, à savoir le modèle de *noeud-arête.* Par conséquent, la technique proposée ne requiert pas une cartographie dédiée ;
- L'invention peut être facilement incorporée par les systèmes de navigation inertielle existants qui souhaitent exploiter la cartographie de lieux sans avoir besoin de modifications importantes dans l'implémentation du système. En effet, étant donné que le module « MUPT » 33 fournit l'information cartographique au module d'estimation d'erreurs 3 en tant qu'entrée, cela n'entraine pas de grandes modifications du code préalablement utilisé.

L'invention est parfaitement adaptée pour une application de guidage en temps réel de piétons à l'intérieur d'un bâtiment. Ainsi, l'invention peut s'appliquer par exemple pour l'aide à la navigation de personnes mal voyantes dans les couloirs et les stations de métro ou encore pour l'assistance de primo-intervenants, tels que des pompiers ou des policiers par exemple, lors d'une intervention. L'invention peut aussi s'appliquer pour un guidage à l'extérieur.

Enfin, un dispositif selon l'invention peut s'appliquer non seulement pour le guidage personnes mais aussi pour le guidage d'objets commandables, notamment des robots.

**Revendications**

1. Dispositif d'aide à la navigation, ledit dispositif étant apte à être embarqué sur un porteur, et comportant :

    - au moins une centrale inertielle (1);
    - un module d'intégration (5) étant apte à estimer la position, la vitesse et l'orientation du porteur à partir des données fournies par la centrale inertielle (1) ;
    - une carte numérisée (22) des lieux dans lesquels évolue le porteur, ladite carte étant apte à stocker un réseau navigable (42) le long duquel peut se déplacer le porteur ;

    **caractérisé en ce que** ledit dispositif comporte en outre :

    - un module (33) générateur de pseudo-mesures de position (45) à partir de la position estimée par le module d'intégration (5) et des données cartographiques fournies par la carte numérisée (22), une pseudo-mesure de position indiquant la position qui devrait être estimée par le module d'intégration (5) en présence de contraintes de mouvement imposées par la carte numérisée des lieux (22), ledit module générateur de pseudo-mesures de position (33) étant apte à projeter la position (43) calculée par ledit module d'intégration sur ledit réseau navigable afin de générer ladite pseudo-mesure de position (45) ;
    - un filtre de Kalman étendu indirect (3) relié au module (33) générateur de pseudo-mesures de position par un interrupteur (7), ledit filtre étant apte à estimer les erreurs sur la position, la vitesse et l'orientation estimées par le module d'intégration (5) à partir des pseudo-mesures de position produites par le module générateur de pseudo-mesures de position (33);
    - un module (2) étant apte à indiquer la disponibilité d'une pseudo-mesure du module générateur de pseudo-mesures de position (33) et étant apte à commander la fermeture de l'interrupteur (7) lorsqu'une pseudo-mesure est disponible et étant apte à l'ouvrir dans le cas contraire ;

    la sortie du module d'intégration (5), indiquant l'estimation de position, vitesse et orientation, étant reliée au module générateur de pseudo-mesures de position (33), au filtre de Kalman (3) et à l'entrée positive d'un filtre d'un soustracteur (4), les erreurs estimées par le filtre de Kalman (3) étant fournies à l'entrée négative du soustracteur (4), la sortie dudit soustracteur fournissant la position, la vitesse et l'orientation corrigées du porteur.

2. Dispositif selon la revendication 1, **caractérisé en ce que** le dispositif est apte à envoyer les données de position, vitesse et orientation corrigées, présentes en sortie du soustracteur, (4) au module d'intégration (5) pour que ce dernier effectue la prochaine estimation de position à partir de ces données.

3. Dispositif selon l'une quelconque des revendications précédentes, **caractérisé en ce qu'**il comporte un module (6) étant apte à générer une pseudo-mesure de vitesse de la centrale inertielle, une pseudo-mesure de vitesse indiquant la vitesse qui devrait être estimée par le module d'intégration (5) lorsque l'on détecte que la centrale ne se déplace pas, filtre de Kalman indirect (3) étant apte à estimer les erreurs sur la position, la vitesse et l'orientation estimées par le module d'intégration (5) à partir des pseudo-mesures de vitesses produites par le module (6), les données corrigées en sortie du soustracteur (4) étant relatives à la position, à la vitesse et à l'orientation du porteur.

4. Dispositif selon l'une quelconque des revendications précédentes, **caractérisé en ce que** le niveau de précision d'une pseudo-mesure de position est défini à l'aide d'une matrice de covariance, ladite matrice modélisant l'incertitude dans la position du porteur autour d'une arête *s* sur laquelle se trouve le porteur, ladite arête étant située à l'intérieur du réseau navigable stocké dans la carte numérisée (22).

5. Dispositif selon la revendication 4, **caractérisé en ce que** la matrice de covariance *R*(*s*) est définie selon la relation suivante :

$$R(s) = \Phi_s \begin{bmatrix} \sigma_o^2 & 0 & 0 \\ 0 & \sigma_a^2 & 0 \\ 0 & 0 & \sigma_n^2 \end{bmatrix} \Phi_s^T$$

où $\Phi_s$ est la matrice de rotation conventionnelle associée à l'arête *s* et où $\sigma_o^2$ et $\sigma_n^2$ représentent les incertitudes de la position dans les deux directions qui conforment le plan orthogonal à l'arête *s* et $\sigma_a^2$ l'incertitude au long de l'arête *s* du réseau navigable (42).

6. Dispositif selon l'une quelconque des revendications précédentes, **caractérisé en ce que** la carte numérisée décrit l'intérieur d'un bâtiment.

**Patentansprüche**

1. Navigationshilfevorrichtung, wobei die Vorrichtung zum Platzieren an einem Träger ausgelegt ist und Folgendes umfasst:

    - wenigstens eine Trägheitseinheit (1);
    - ein Integrationsmodul (5), ausgelegt zum Schätzen von Position, Geschwindigkeit und Orientierung des Trägers auf der Basis von von der Trägheitseinheit (1) gelieferten Daten;
    - eine digitale Karte (22) der Orte, an denen sich der Träger aufhält, wobei die Karte zum Speichern eines navigierbaren Netzwerks (42) ausgelegt ist, über das sich der Träger bewegen kann;

**dadurch gekennzeichnet, dass** die Vorrichtung ferner Folgendes umfasst:

    - ein Modul (33) zum Erzeugen von Positions-Pseudomesswerten (45) auf der Basis der von dem Integrationsmodul (5) geschätzten Position und von von der digitalen Karte (22) gelieferten kartographischen Daten, wobei ein Positions-Pseudomesswert die Position anzeigt, die von dem Integrationsmodul (5) bei Vorliegen von Bewegungsbeschränkungen geschätzt werden muss, die von der digitalen Karte (22) der Orte auferlegt werden, wobei das Modul (33) zum Erzeugen von Positions-Pseudomesswerten zum Projizieren der von dem Integrationsmodul berechneten Position (43) auf dem navigierbaren Netzwerk ausgelegt ist, um den Positions-Pseudomesswert (45) zu erzeugen;
    - ein indirektes erweitertes Kalman-Filter (3), das durch einen Schalter (7) mit dem Modul (33) zum Erzeugen von Positions-Pseudomesswerten verbunden ist, wobei das Filter zum Schätzen von Fehlern in Bezug auf die vom Integrationsmodul (5) geschätzte Position, Geschwindigkeit und Orientierung auf der Basis von von dem Modul (33) zum Erzeugen von Positions-Pseudomesswerten erzeugten Positions-Pseudomesswerten geschätzt wird;
    - ein Modul (2), ausgelegt zum Anzeigen der Verfügbarkeit eines Pseudomesswertes des Moduls (33) zum Erzeugen von Positions-Pseudomesswerten und ausgelegt zum Steuern des Schließens des Schalters (7), wenn ein Pseudomesswert verfügbar ist, und im gegenteiligen Fall ausgelegt zum Öffnen des Schalters;

wobei der Ausgang des Integrationsmoduls (5), der die Positions-, Geschwindigkeits- und Orientierungsschätzung anzeigt, mit dem Modul (33) zum Erzeugen von Positions-Pseudomesswerten, dem Kalman-Filter (3) und dem positiven Eingang eines Filters eines Subtrahierers (4) verbunden ist, wobei die von dem Kalman-Filter (3) geschätzten Fehler zum negativen Eingang des Subtrahierers (4) gespeist werden, wobei der Ausgang des Subtrahierers die korrigierte Position, Geschwindigkeit und Orientierung des Trägers liefert.

2. Vorrichtung nach Anspruch 1, **dadurch gekennzeichnet, dass** die Vorrichtung zum Senden der am Ausgang des Subtrahierers (4) vorliegenden korrigierten Positions-, Geschwindigkeits- und Orientierungsdaten zum Integrationsmodul (5) ausgelegt ist, so dass das Modul die nächste Positionsschätzung auf der Basis dieser Daten durchführt.

**3.** Vorrichtung nach einem der vorherigen Ansprüche, **dadurch gekennzeichnet, dass** sie ein Modul (6), ausgelegt zum Erzeugen eines Geschwindigkeits-Pseudomesswertes der Trägheitseinheit, wobei ein Geschwindigkeits-Pseudomesswert die Geschwindigkeit anzeigt, die von dem Integrationsmodul (5) geschätzt werden muss, wenn erkannt wird, dass sich die Einheit nicht bewegt, und ein indirektes Kalman-Filter (3) umfasst, ausgelegt zum Schätzen der Fehler in der Positions-, Geschwindigkeits- und Orientierungsschätzung durch das Integrationsmodul (5) auf der Basis der von dem Modul (6) erzeugten Geschwindigkeits-Pseudomesswerte, wobei sich die am Ausgang des Subtrahierers (4) korrigierten Daten auf Position, Geschwindigkeit und Orientierung des Trägers beziehen.

**4.** Vorrichtung nach einem der vorherigen Ansprüche, **dadurch gekennzeichnet, dass** das Präzisionsniveau eines Positions-Pseudomesswerts mit einer Kovarianzmatrix definiert wird, wobei die Matrix die Unsicherheit in der Position des Trägers um eine Kante s modelliert, an der sich der Träger befindet, und die Kante sich innerhalb des in der digitalen Karte (22) gespeicherten navigierbaren Netzwerks befindet.

**5.** Vorrichtung nach Anspruch 4, **dadurch gekennzeichnet, dass** die Kovarianzmatrix $R(s)$ gemäß der folgenden Relation definiert wird:

$$R(s) = \Phi_s \begin{bmatrix} \sigma_o^2 & 0 & 0 \\ 0 & \sigma_a^2 & 0 \\ 0 & 0 & \sigma_n^2 \end{bmatrix} \Phi_s^T$$

wobei $\Phi_s$ die mit der Kante $s$ assoziierte konventionelle Rotationsmatrix ist und wobei $\sigma_o^2$ und $\sigma_n^2$ die Unsicherheiten der Position in den beiden Richtungen repräsentieren, die die Ebene orthogonal zur Kante $s$ repräsentieren, und wobei $\sigma_a^2$ die Unsicherheit entlang der Kante $s$ des navigierbaren Netzwerks (42) repräsentiert.

**6.** Vorrichtung nach einem der vorherigen Ansprüche, **dadurch gekennzeichnet, dass** die digitale Karte die Innenseite eines Gebäudes veranschaulicht.

## Claims

**1.** A navigation assistance device, said device being designed to be placed on a carrier and comprising:

- at least one inertial unit (1);

- an integration module (5) designed to estimate the position, speed and orientation of said carrier on the basis of data supplied by said inertial unit (1);
- a digital map (22) of the locations in which said carrier is present, said map being designed to store a navigable network (42), over which said carrier can move;

**characterised in that** said device further comprises:

- a module (33) for generating position pseudo-measurements (45) on the basis of the position estimated by said integration module (5) and of cartographic data supplied by said digital map (22), a position pseudo-measurement indicating the position that must be estimated by said integration module (5) in the event of movement constraints imposed by said digital map (22) of the locations, said module for generating position pseudo-measurements (33) being designed to project the position (43) computed by said integration module on said navigable network so as to generate said position pseudo-measurement (45);
- an indirect extended Kalman filter (3) connected by a switch (7) to said module (33) for generating position pseudo-measurements, said filter being designed to estimate any errors relating to the position, speed and orientation estimated by said integration module (5) on the basis of the position pseudo-measurements generated by said module (33) for generating position pseudo-measurements;
- a module (2) designed to indicate the availability of a pseudo-measurement of said module (33) for generating position pseudo-measurements and designed to control the closure of said switch (7) when a pseudo-measurement is available and designed to otherwise open said switch;

the output of said integration module (5), which indicates the position, speed and orientation estimate, being connected to said module (33) for generating position pseudo-measurements, to said Kalman filter (3) and to the positive input of a filter of a subtractor (4), the errors estimated by said Kalman filter (3) being fed to the negative input of said subtractor (4), the output of said subtractor supplying the corrected position, speed and orientation of the carrier.

**2.** The device according to claim 1, **characterised in that** said device is designed to send the corrected position, speed and orientation data present at the output of said subtractor (4) to said integration module (5) so that said module carries out the next position estimate on the basis of said data.

3. The device according to any one of the preceding claims, **characterised in that** it comprises a module (6) designed to generate a speed pseudo-measurement of said inertial unit, with a speed pseudo-measurement indicating the speed that must be estimated by said integration module (5) when non-movement of said unit is detected, an indirect Kalman filter (3) designed to estimate the errors in the position, speed and orientation estimated by said integration module (5) on the basis of the speed pseudo-measurements generated by said module (6), the data corrected at the output of said subtractor (4) relating to the position, speed and orientation of said carrier.

4. The device according to any one of the preceding claims, **characterised in that** the level of precision of a position pseudo-measurement is defined using a covariance matrix, said matrix modelling the uncertainty in the position of said carrier around an edge $s$, on which said carrier is located, said edge being located inside said navigable network stored in said digital map (22).

5. The device according to claim 4, **characterised in that** said covariance matrix $R(s)$ is defined according to the following relation:

$$R(s) = \Phi_s \begin{bmatrix} \sigma_o^2 & 0 & 0 \\ 0 & \sigma_a^2 & 0 \\ 0 & 0 & \sigma_n^2 \end{bmatrix} \Phi_s^T$$

where $\Phi_s$ is the conventional rotation matrix associated with the edge $s$ and where $\sigma_o^2$ and $\sigma_n^2$ represent the uncertainties of the position in the two directions that form the plane orthogonal to the edge $s$ and where $\sigma_a^2$ represents the uncertainty along the edge $s$ of said navigable network (42).

6. The device according to any one of the preceding claims, **characterised in that** said digital map depicts the inside of a building.

FIG.1

FIG.2

FIG.3

FIG.5

FIG.4

## RÉFÉRENCES CITÉES DANS LA DESCRIPTION

**Littérature non-brevet citée dans la description**

- **B. KRACH ; P. ROBERSTON.** Cascaded estimation architecture for integration of foot-mounted inertial sensors. *Proc. IEEE/ION Position, Location and Navigation Symposium,* 2008, 112-119
- **WIDYAWAN, M. KLEPAL ; S. BEAUREGARD.** A backtracking particle filter for fusing building plans with pdr displacement estimates. *Proc. 5th Workshop on Positioning, Navigation and Communication WPNC 2008,* 27 Mars 2008, 207-212
- **DANIELA BÜCHEL ; PIERRE-YVES GILLIÉRON.** Navigation pédestre à l'intérieur des bâtiments. *Géomatique Suisse,* Novembre 2004, 664-668